# EUROPEAN PATENT APPLICATION

(11) **EP 4 653 082 A1**
(43) Date of publication of application: **26.11.2025**
(21) Application number: 24886229.4
(22) Date of filing: 30.10.2024
(51) Int. Cl.: B01J 19/32, B01J 19/24, B01J 19/00

(54) **VACUUM CONDENSATION DRYING DEVICE**

(30) Priority: 03.11.2023 KR 20230150900
(71) Applicant: LG CHEM, LTD., Seoul 07336 (KR)
(72) Inventor: PARK, Hongseok, Daejeon 34122 (KR); KWON, Hyun Jee, Daejeon 34122 (KR); KANG, Mooseong, Daejeon 34122 (KR); CHOI, Jaehoon, Daejeon 34122 (KR)
(74) Representative: Hoffmann Eitle
(86) International application number: PCT/KR2024/016739
(87) International publication number: WO 2025/095556

(57) **Abstract**

Disclosed is an electric heating reactor. The reactor includes: a reaction tube including a first passage formed therein, the first passage being formed in a length direction and through which a reactant passes; a pair of connection tubes coupled to both ends of the reaction tube in the length direction, electrically connected to the reaction tube, and including a second passage connected to the first passage; a power source supplying power to the reaction tube to heat the reactant passing through the first passage in the reaction tube; and a pair of conductive sockets electrically connecting the power source to the pair of connection tubes.

## Description

### [Technical Field]

### CROSS-REFERENCE TO RELATED APPLICATION

This application claims priority to and the benefit of Korean Patent Application No. 10-2023-0150900 filed in the Korean Intellectual Property Office on November 3, 2023, the entire contents of which are incorporated herein by reference.

The present disclosure relates to an electric heating reactor, and more particularly, to an electric heating reactor in which a connection tube having a low resistivity is attached to a reaction tube having a high resistivity and a power source is connected to the connection tube, thereby preventing unnecessary heat occurrence at a connecting portion between the power source and the connection tube and preventing damage and thermal deformation of the connecting portion.

### [Background Art]

In a chemical industry, various facilities (e.g., crackers, reformers, reactors, and boilers) are maintained at high temperatures by using a natural gas as a fuel. However, heating by natural gas combustion is not only inefficient in terms of energy consumption, but also a major cause of carbon emissions. Therefore, efforts are being made to replace the heating method by the natural gas combustion with an electric heating method.

In general, in the electric heating method, a current is applied to a tubular reactor having a high resistivity to heat the reactor itself. In order to apply the current to the reactor, a conductive material may be connected and brought into contact with a reactor made of an alloy material. However, a connecting (contact) portion between the reactor and the conductive material may be damaged by exposure to a high temperature due to the reactor having a high resistivity or may be expanded and deformed due to the high temperature. If the connecting (contact) portion is damaged or deformed, a contact resistance increases, which may further increase a temperature of the connecting (contact) portion or decrease energy efficiency.

The above information disclosed in this Background section is provided only to assist in a better understanding of the background of the present disclosure, and may therefore include information that is not a part of the prior art already known to those skilled in the art to which the present disclosure pertains.

### [Disclosure]

### [Technical Problem]

The present disclosure attempts to provide an electric heating reactor in which a connection tube having a low resistivity is attached to a reaction tube having a high resistivity and a power source is connected to the connection tube to thus prevent unnecessary heat occurrence at a connecting portion between the power source and the connection tube and damage and thermal deformation of the connecting portion, thereby making it widely applicable to a high-temperature process (e.g., reaction, drying, or firing).

### [Technical Solution]

According to an embodiment, provided is an electric heating reactor including: a reaction tube including a first passage formed in the reaction tube, the first passage being formed in a length direction and through which a reactant passes; a pair of connection tubes coupled to both ends of the reaction tube in the length direction, electrically connected to the reaction tube, and including a second passage connected to the first passage; a power source supplying power to the reaction tube to heat the reactant passing through the first passage in the reaction tube; and a pair of conductive sockets electrically connecting the power source to the pair of connection tubes.

A first resistivity of the reaction tube may be higher than a second resistivity of each of the pair of connection tubes.

The reactor may further include a cooling tube mounted on at least one of the pair of connection tubes.

The pair of connection tubes may include a first connection tube coupled to one end of the reaction tube, and a second connection tube coupled to the other end of the reaction tube.

The pair of connection tubes may be welded to the reaction tube.

A resistivity of the first connection tube may be higher than a resistivity of the second connection tube.

A distance between the reaction tube and a connecting portion between the first conductive socket and the first connection tube may be shorter than a distance between the reaction tube and a connecting portion between the second conductive socket and the second connection tube.

The second connection tube may be longer than the first connection tube.

The reactor may further include a cooling tube mounted on the second connection tube among the first and second connection tubes.

The cooling tube may be disposed between the second conductive socket and the cooling tube.

Each connection tube and the corresponding conductive socket may be flange-coupled to each other or coupled to each other by a pipe clamp.

### [Advantageous Effects]

According to the present disclosure, the power source may be connected to the connection tube having a low resistivity to thus prevent the unnecessary heat occurrence at the connecting (contact) portion. It is thus possible to prevent the damage and thermal deformation of the connecting (contact) portion.

It is also possible to design to reduce the contact resistance of the connecting (contact) portion by preventing overheating at the connecting (contact) portion and to take an additional measure such as a surface treatment.

Furthermore, there is no need for any additional facility for cooling the connecting (contact) portion, which may simplify reactor design.

In addition, any advantage which may be acquired or inferred from an embodiment of the present disclosure is directly or implicitly disclosed in the detailed description of an embodiment of the present disclosure. That is, various advantages inferred from an embodiment of the present disclosure are disclosed in the detailed description described below.

### [Description of the Drawings]

Embodiments in the specification may be better understood by reference to the following description in connection with the accompanying drawings in which like reference numerals refer to identical or functionally similar elements.
FIG. 1 is a schematic diagram showing an electric heating reactor according to an embodiment of the present disclosure.
FIG. 2 shows an example of portion "A1" in FIG. 1.
FIG. 3 is a schematic plan view of FIG. 2.
FIG. 4 shows another example of portion "A1" in FIG. 1.
FIG. 5 is a schematic plan view of FIG. 4.

It should be understood that the drawings referenced above are not necessarily drawn to scale, and present a rather simplified representation of various preferred features illustrating the basic principles of the present device. For example, specific design features of the present device, including a specific dimension, orientation, position and shape, are determined in part by the particular intended application and environment of use.

### [Mode for Invention]

A Term used herein is only to describe a specific embodiment, and is not intended to limit the present device. A term of a single number used herein is intended to include its plural number unless the context clearly indicates otherwise. It should also be understood that the terms "include" and/or "including", when used in the specification, specify the presence of the recited features, integers, steps, operations, elements and/or components, and do not exclude the presence or addition of one or more of other features, integers, steps, operations, elements, components and/or groups thereof. The term "and/or" used herein includes any one or all combinations of the associated listed items.

Further, it should be understood that one or more of methods described below or aspects thereof may be executed by at least one controller. The term "controller" may refer to a hardware device including a memory and a processor. The memory may store program instructions, and the processor may be specifically programmed to execute the program instructions to perform one or more processes described below in more detail. The controller may control operations of units, modules, components, devices, or the like, as described herein. It should also be understood that the methods described below may be executed by an apparatus including the controller in conjunction with one or more other components, as appreciated by those skilled in the art.

In addition, the controller of the present disclosure may be implemented as a non-transitory computer-readable recording medium including executable program instructions executed by the processor. An example of the computer-readable recording medium may include a read only memory (ROM), a random access memory (RAM), a compact disk read only memory (CD-ROM), a magnetic tape, a floppy disk, a flash drive, a smart card, or an optical data storage device, and is not limited thereto. The computer-readable recording medium may also be distributed throughout a computer network, and the program instructions may thus be stored and executed in a distributed manner, for example, on a telematics server or a controller area network (CAN).

According to the present disclosure, an electric heating reactor may include: a reaction tube including a first passage formed therein, the first passage being formed in a length direction and through which a reactant passes; a pair of connection tubes coupled to both ends of the reaction tube in the length direction and electrically connected to the reaction tube; a power source supplying power to the reaction tube through the pair of connection tubes to heat the reactant passing through the first passage in the reaction tube; and a pair of conductive sockets connecting the power source to the pair of connection tubes to allow a current to flow therein. Here, the reaction tube may have a first resistivity, and a pair of connection tubes may each have a second resistivity. The second resistivity is lower than the first resistivity, and when power is supplied to the tubes, a temperature of the reaction tube may be higher than that of the pair of connection tubes. The pair of conductive sockets may be connected to the pair of connection tubes having lower resistivity, thereby preventing unnecessary heat occurrence at a connecting (contact) portion. It is thus possible to prevent damage and thermal deformation of the connecting (contact) portion. It is also possible to design to reduce a contact resistance of the connecting (contact) portion (for example, increasing a contact area) by preventing overheating at the connecting (contact) portion and to take an additional measure such as a surface treatment. Furthermore, there is no need for any additional facility for cooling the connecting (contact) portion, which may simplify reactor design.

Hereinafter, the present disclosure is described in detail with reference to the accompanying drawings.

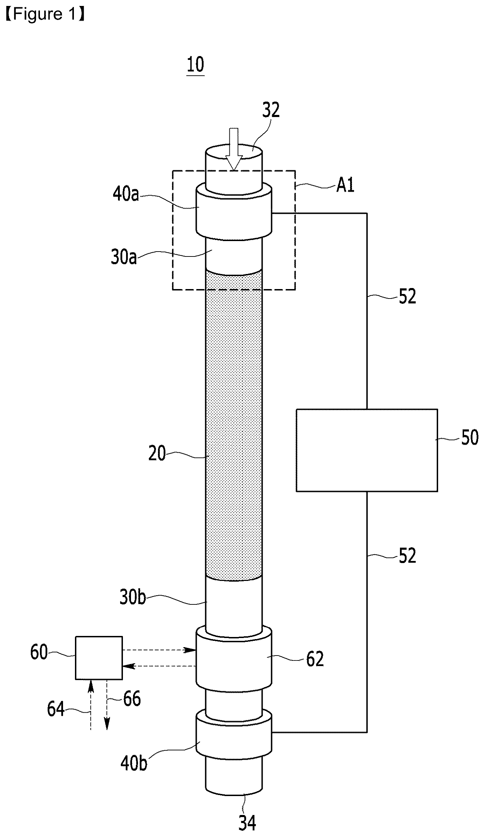

FIG. 1 is a schematic diagram showing an electric heating reactor according to an embodiment of the present disclosure.

As shown in FIG. 1, an electric heating reactor 10 according to an embodiment of the present disclosure may receive power to generate heat, and transfer heat to a reactant therein by using the generated heat. The electric heating reactor 10 may include a reaction tube 20, a pair of connection tubes (first and second connection tubes 30a and 30b), a power source 50, and a pair of conductive sockets (first and second conductive sockets 40a and 40b).

The reaction tube 20 may be made of an alloy material having a high resistivity, and include the first passage formed therein, the first passage being formed in the length direction and through which the reactant passes. For example, the reaction tube 20 may have an annular pipe shape, and include the first passage formed therein, the first passage being formed in the length direction. However, a shape of the reaction tube 20 is not limited to the annular pipe shape. The reaction tube 20 has the high resistivity, and accordingly, when power is applied to the reaction tube 20, heat may be generated at the reaction tube 20 and transferred to the reactant in the first passage. The resistivity of the reaction tube 20 is referred to as a first resistivity ρ1.

The pair of connection tubes 30a and 30b may each have a cross-sectional shape identical or similar to that of the reaction tube 20. For example, the pair of connection tubes 30a and 30b may also each have the annular pipe shape. The pair of connection tubes 30a and 30b may be coupled to both ends of the reaction tube 20 in the length direction. That is, the first connection tube 30a may be coupled to one end of the reaction tube 20, and the second connection tube 30b may be coupled to the other end of the reaction tube 20.

An inlet 32 may be formed at one end of the first connection tube 30a, and the reactant requiring a reaction may thus be introduced into the first connection tube 30a through the inlet 32. The first connection tube 30a may include a second passage formed therein, the second passage being connected to the first passage of the reaction tube 20. Accordingly, the reactant introduced into the second passage through the inlet 32 may move to the first passage.

An outlet 34 may be formed at the other end of the second connection tube 30b, and a product in which the reaction is completed and/or an unreacted material in which the reaction is not performed may thus be discharged from the second connection tube 30b through the outlet 34. The second connection tube 30b may also include a second passage formed therein, the second passage being connected to the first passage of the reaction tube 20. Accordingly, the product in which the reaction is completed and/or the unreacted material in which the reaction is not performed may move from the first passage to the second passage while passing through the reaction tube 20, and may be discharged from the second connection tube 30b again through the outlet 34.

The second passage formed in each of the pair of connection tubes 30a and 30b may be connected to the first passage formed in the reaction tube 20, and diameters of the first passage and the second passage may be identical or almost similar to each other. Accordingly, the reactant introduced into the first connection passage 30a through the inlet 32 may sequentially pass through the second passage, the first passage, and the second passage in the first connection passage 30a, the reaction tube 20, and the second connection passage 30b to perform the reaction and may flow out from the second passage through the outlet 34. In addition, the diameters of the first and second passages may be identical or almost similar to each other, and accordingly, a flow resistance of the reactant passing through the first and second passages may not increase.

The pair of connection tubes 30a and 30b may each be made of a lower-conductivity material (for example, a metal material). The pair of connection tubes 30a and 30b may each have a second resistivity ρ2, and the second resistivity ρ2 may be lower than the first resistivity ρ1. Therefore, when the same power is applied to the reaction tube 20 and the pair of connection tubes 30a and 30b, heat generated at the reaction tube 20 may be greater than heat generated at the pair of connection tubes 30a and 30b. Accordingly, the temperature of the reaction tube 20 may become higher than a temperature of the pair of connection tubes 30a and 30b. In an example, the reactant may be preheated at the first connection tube 30a, the reaction of the reactant may mainly occur at the reaction tube 20, and the second connection tube 30b may assist the reaction of the unreacted material and suppress an additional reaction of the product.

The pair of connection tubes 30a and 30b may be electrically connected to the reaction tube 20. Accordingly, the current supplied to the first connection tube 30a may flow to the second connection tube 30b through the reaction tube 20, and vice versa. That is, when power is applied to the pair of connection tubes 30a and 30b, the same power may also be applied to the reaction tube 20. In an example, the pair of connection tubes 30a and 30b may be welded to the reaction tube 20. However, the coupling between the pair of connection tubes 30a and 30b and the reaction tube 20 is not limited to coupling by welding.

The power source 50 may supply power to the reaction tube 20 through the pair of connection tubes 30a and 30b. The power source 50 may be an alternating current power source or a direct current power source.

The pair of conductive sockets 40a and 40b may electrically connect the power source 50 to the pair of connection tubes 30a and 30b, respectively. When the power source 50 supplies power to the pair of connection tubes 30a and 30b through the pair of conductive sockets 40a and 40b, power may be equally supplied to the reaction tube 20 through the pair of connection tubes 30a and 30b. Accordingly, the pair of connection tubes 30a and 30b and the reaction tube 20 may generate heat. However, the second resistivity ρ2 of each of the pair of connection tubes 30a and 30b may be lower than the first resistivity ρ1 of the reaction tube 20, and heat generated at the pair of connection tubes 30a and 30b may thus be lower than the heat generated at the reaction tube 20, and the temperature of the pair of connection tubes 30a and 30b may be lower than the temperature of the reaction tube 20. The pair of conductive sockets 40a and 40b may be connected to the pair of connection tubes 30a and 30b, each of which has a lower temperature, thus preventing the unnecessary heat occurrence at the connecting (contact) portion between each of the pair of conductive sockets 40a and 40b and each of the pair of connection tubes 30a and 30b. It is thus possible to prevent the damage and thermal deformation of the connecting (contact) portion.

The first conductive socket 40a may be mounted on one end of the first connection tube 30a and may electrically connect the power source 50 to the first connection tube 30a by using a wire 52. In addition, the second conductive socket 40b may be mounted on the other end of the second connection tube 30b and may electrically connect the power source 50 to the second connection tube 30b by using the wire 52. Accordingly, power from the same power source 50 may be supplied to the first and second connection tubes 30a and 30b through the first and second conductive sockets 40a and 40b.

The reactant requiring the reaction may mainly pass through the first connection tube 30a and the product in which the reaction is completed may mainly pass through the second connection tube 30b, and the temperature of the second connection tube 30b may thus become higher than the temperature of the first connection tube 30a. Accordingly, a temperature of the connecting (contact) portion between the second connection tube 30b and the second conductive socket 40b may be higher than a temperature of the connecting (contact) portion between the first connection tube 30a and the first conductive socket 40a, and the connecting (contact) portion between the second connection tube 30b and the second conductive socket 40b may be damaged or deformed. In one example, the second resistivity ρ2 of the second connection tube 30b may be made lower than the second resistivity ρ2 of the first connection tube 30a to prevent the temperature of the connecting (contact) portion between the second connection tube 30b and the second conductive socket 40b from becoming higher than the temperature of the connecting (contact) portion between the first connection tube 30a and the first conductive socket 40a. In another example, a length of the second connection tube 30b may be made longer than a length of the first connection tube 30a, and the first and second conductive sockets 40a and 40b may be connected to the first and second connection tubes 30a and 30b, respectively, to allow a distance between the reaction tube 20 and the connecting (contact) part between the second connection tube 30b and the second conductive socket 40b to be longer than a distance between the reaction tube 20 and the connecting (contact) portion between the first connection tube 30a and the first conductive socket 40a.

The electric heating reactor 10 may further include a cooler 60 and a cooling tube 62. The cooler 60 may receive a cold refrigerant through a refrigerant introduction line 64 and transfer the cold refrigerant to the cooling tube 62. The cooling tube 62 may be mounted on at least one of the first and second connection tubes 30a and 30b and may cool the connection tubes 30a and 30b through heat exchange with the connection tubes 30a and 30b. The refrigerant that undergoes heat exchange with the connection tubes 30a and 30b may be returned to the cooler 60 and discharged from the cooler 60 through a refrigerant discharge line 66. In an example, the cooling tube 62 may be disposed on the second connection tube 30b and may cool the second connection tube 30b. Accordingly, the product may be prevented from causing any additional reaction in the second connection tube 30b. In addition, the cooling tube 62 may be mounted between the reaction tube 20 and the second conductive socket 40b. Accordingly, the connecting (contact) portion between the second connection tube 30b and the second conductive socket 40b may be further prevented from being heated by the product.

Hereinafter, the coupling between each of the pair of connection tubes 30a and 30b and each of the pair of conductive sockets 40a and 40b is described in more detail. Here, the coupling between the first connection tube 30a and the first conductive socket 40a is shown as an example. However, it should be understood that the second connection tube 30b and the second conductive socket 40b may also be coupled to each other in the same way as the first connection tube 30a and the first conductive socket 40a.

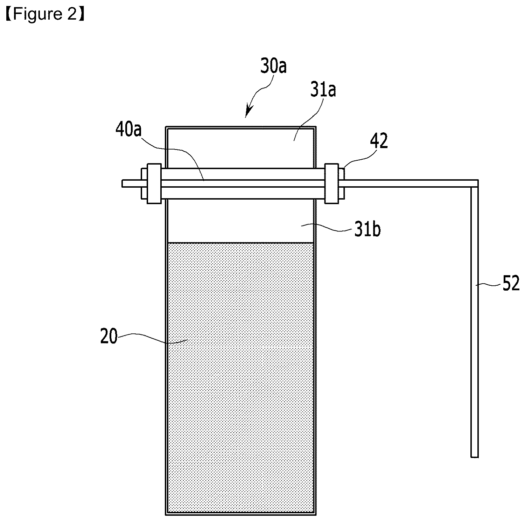

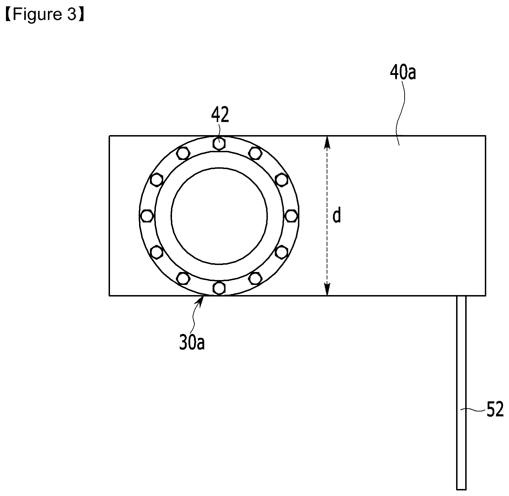

FIG. 2 shows an example of portion "A1" in FIG. 1; and FIG. 3 is a schematic plan view of FIG. 2. FIGS. 2 and 3 show a case where the first connection tube 30a and the first conductive socket 40a are flange-coupled to each other.

As shown in FIGS. 2 and 3, the first connection tube 30a may include a first piece 31a having a flange formed at one end, and a second piece 31b having a flange formed at one end, and the flange of the first piece 31a and the flange of the second piece 31b may face each other. The flanges may each be formed in an annular shape having the same flange diameter d. The first conductive socket 40a may be formed in a plate shape having a wider area than the flange and a hole corresponding to the second passage. The first conductive socket 40a may be disposed between the flange of the first piece 31a and the flange of the second piece 31b, and the flange of the first piece 31a, the flange of the second piece 31b, and the first conductive socket 40a may be fastened to one another by using a plurality of fastening members 42, such as bolts, pins, and rivets. When the first connection tube 30a and the first conductive socket 40a are flange-coupled to each other, the contact resistance of the connecting (contact) portion may decrease as the flange diameter d increases. Therefore, additional heat occurrence at the connecting (contact) portion may decrease as the flange diameter d increases.

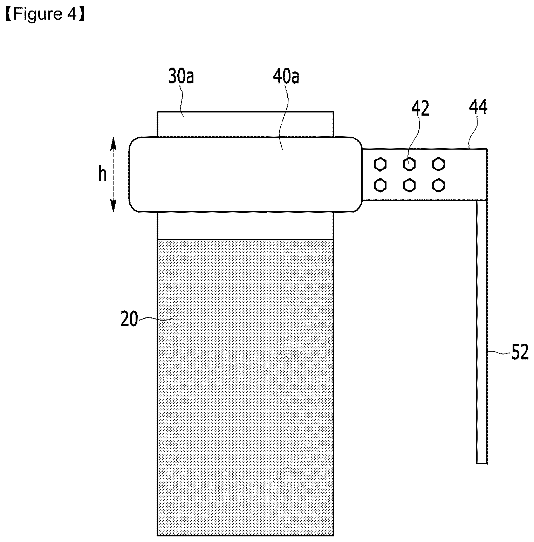

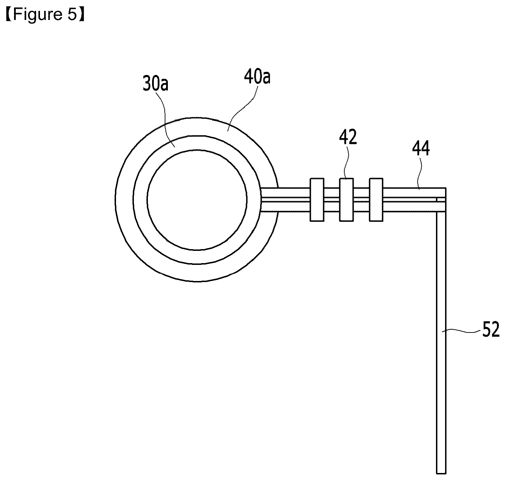

FIG. 4 shows another example of portion "A1" in FIG. 1; and FIG. 5 is a schematic plan view of FIG. 4. FIGS. 4 and 5 show a case where the first connection tube 30a and the first conductive socket 40a are coupled to each other by a pipe clamp.

As shown in FIGS. 4 and 5, the first conductive socket 40a may be formed in a pipe shape in which a portion is cut off while surrounding the first connection tube 30a. Accordingly, the first conductive socket 40a may include one end and the other end that face each other and are not connected to each other. In addition, the one end and the other end may form clamps 44, and the clamps 44 may face each other and extend to be parallel to each other. The first conductive socket 40a may surround the first connection tube 30a, and the clamps 44 of the first conductive socket 40a may be tightened, thereby tightly pressing the first conductive socket 40a against the first connection tube 30a. The clamps 44 of the first conductive socket 40a may be tightened using the fastening member 42, thereby stably mounting the first conductive socket 40a on the first connection tube 30a. When the first connection tube 30a and the first conductive socket 40a are coupled to each other by a pipe flange, the contact resistance of the connecting (contact) portion may decrease as a pipe height h increases. Therefore, the additional heat occurrence at the connecting (contact) portion may decrease as the pipe height h increases.

Although the embodiments of the present disclosure have been described hereinabove, the scope of the present disclosure is not limited thereto, and all equivalent modifications easily modified by those skilled in the art to which the present disclosure pertains are intended to fall within the scope and spirit of the present disclosure.

## Claims

1. An electric heating reactor comprising:
a reaction tube including a first passage formed in the reaction tube, the first passage being formed in a length direction and through which a reactant passes;
a pair of connection tubes coupled to both ends of the reaction tube in the length direction, electrically connected to the reaction tube, and including a second passage connected to the first passage;
a power source supplying power to the reaction tube to heat the reactant passing through the first passage in the reaction tube; and
a pair of conductive sockets electrically connecting the power source to the pair of connection tubes.

2. The electric heating reactor of claim 1, wherein
a first resistivity of the reaction tube is higher than a second resistivity of each of the pair of connection tubes.

3. The electric heating reactor of claim 1, further comprising
a cooling tube mounted on at least one of the pair of connection tubes.

4. The electric heating reactor of claim 1, wherein
the pair of connection tubes includes
a first connection tube coupled to one end of the reaction tube, and
a second connection tube coupled to the other end of the reaction tube.

5. The electric heating reactor of claim 4, wherein
the pair of connection tubes is welded to the reaction tube.

6. The electric heating reactor of claim 4, wherein
a resistivity of the first connection tube is higher than a resistivity of the second connection tube.

7. The electric heating reactor of claim 4, wherein
a distance between the reaction tube and a connecting portion between the first conductive socket and the first connection tube is shorter than a distance between the reaction tube and a connecting portion between the second conductive socket and the second connection tube.

8. The electric heating reactor of claim 7, wherein
the second connection tube is longer than the first connection tube.

9. The electric heating reactor of claim 4, further comprising
a cooling tube mounted on the second connection tube among the first and second connection tubes.

10. The electric heating reactor of claim 9, wherein
the cooling tube is disposed between the second conductive socket and the cooling tube.

11. The electric heating reactor of claim 1, wherein
each connection tube and the corresponding conductive socket are flange-coupled to each other or coupled to each other by a pipe clamp.
